# EUROPÄISCHE PATENTANMELDUNG

(11) **EP 2 136 035 A1**
(43) Veröffentlichungstag der Anmeldung: **23.12.2009**
(21) Anmeldenummer: 08010920.0
(22) Anmeldetag: 16.06.2008
(51) Int. Cl.: F01D 15/00, F01D 19/00, F01K 23/10

(54) **Betrieb einer Gas- und Dampfturbinenanlage mittels Frequenzumrichter**

(71) Anmelder: SIEMENS AKTIENGESELLSCHAFT, 80333 München (DE)
(72) Erfinder: Beul, Ulrich, 45149 Essen (DE); Heue, Matthias, 44879 Bochum (DE); Hofbauer, Thomas, Dr., 45478 Muelheim (DE); Popella, Hartmut, Dr., 49492 Westerkappeln (DE); De Lazzer, Armin, Dr., 45479 Mühlheim an der Ruhr (DE)

(57) **Zusammenfassung**

Bei einem Verfahren zum Betreiben einer Gas- und Dampfturbinenanlage (1) mit einem einer Anfahreinrichtung (58) einer Gasturbine (2) zugeordneten Frequenzumrichter (60), und einem einer Dampfturbine zugeordneten Generator (30), soll bei besonders geringem Konstruktionsaufwand eine besonders hohe betriebliche Flexibilität erreichbar sein. Dazu wird die elektrische Leistung des Generators (30) über den Frequenzumrichter (60) in ein Verbrauchernetz eingespeist. Desweiteren ist eine für die Durchführung des Verfahrens besonders geeignete Gas- und Dampfturbinenanlage (1) angegeben.

## Beschreibung

Die Erfindung betrifft ein Verfahren zum Betreiben einer Gas- und Dampfturbinenanlage mit einem einer Anfahreinrichtung einer Gasturbine zugeordneten Frequenzumrichter und einem einer Dampfturbine zugeordneten Generator. Sie betrifft weiter eine derartige Gas- und Dampfturbinenanlage.

Gas- und Dampfturbinenanlagen (GuD-Anlagen) dienen überwiegend der Stromerzeugung. Dabei umfasst eine moderne GuD-Anlage üblicherweise ein bis vier Gasturbinen und mindestens eine Dampfturbine, wobei entweder jede Turbine jeweils einen Generator antreibt (Mehrwellenanlage) oder eine Gasturbine mit der Dampfturbine auf einer gemeinsamen Welle einen einzigen Generator antreibt (Einwellenanlage). Die heißen Abgase der Gasturbine werden dabei in einem Abhitzedampferzeuger zur Erzeugung von Wasserdampf verwendet. Der Dampf wird anschließend der Dampfturbine zugeführt. Üblicherweise entfallen ca. zwei Drittel der elektrischen Leistung auf die Gasturbine und ein Drittel auf den Dampfprozess.

Die Leistung von üblichen GuD-Anlagen liegen im Bereich zwischen beispielsweis 80 MW und 830 MW pro Einheit Gasturbine/Dampfturbine, wobei eine Kraftwerksanlage aus mehreren Einheiten bestehen kann. Im Vergleich dazu hat ein Block eines Kernkraftwerks üblicherweise eine Leistung zwischen 500 MW und 1500 MW.

Zur Erhöhung des Wirkungsgrades der Dampfturbine der GuD-Anlage umfasst diese üblicherweise mehrere Druckstufen, die für unterschiedliche Dampfdrücke ausgelegt sind. Der im Abhitzedampferzeuger mit Hilfe des Abgases der Gasturbine überhitzte Dampf wird dabei nach seiner Entspannung in der Hochdruckstufe der Dampfturbine erneut in den Abhitzedampferzeuger zurückgeführt und nochmals überhitzt. Dieser Dampf wird dann den nachgeschalteten Druckstufen zugeführt. Diese so genannte Zwischenüberhitzung erhöht den Wirkungsgrad der Dampfturbine über die höhere mittlere Temperatur der Wärmezufuhr. Im Übrigen wird damit Erosion an den letzten Schaufeln im Niederdruckteil der Dampfturbine in Folge zu hoher Dampfnässe vermieden.

Theoretisch ist eine Vielzahl von Druckstufen in einer Dampfturbine denkbar, allerdings ist der zusätzliche Investitionsaufwand dann im Verhältnis zur wärmetechnischen Verbesserung zu hoch. Derzeit stellt eine GuD-Anlage mit drei Druckstufen in der Dampfturbine und einer einzigen Zwischenüberhitzung das wirtschaftliche Optimum dar.

Durch ihre Flexibilität, insbesondere die Möglichkeit des schnellen Anfahrens, werden moderne GuD-Anlagen oft zur Bereitstellung kurzzeitig auftretender hoher Leistungsnachfrage im Stromnetz, so genannter Spitzenlast, verwendet. Dies führt zu vergleichsweise häufigen Anfahrvorgängen in GuD-Anlagen. Zum Anfahren der Gasturbine wird dabei üblicherweise der der Gasturbine zugeordnete Generator als Motor verwendet, wobei die Drehzahl der Gasturbine anhand einer anlagenspezifischen Kennlinie langsam erhöht wird. Dazu ist dem Generator üblicherweise eine Anfahreinrichtung mit einem Frequenzumrichter vorschaltbar, der Strom mit einer beliebigen Frequenz aus dem Netzstrom erzeugen kann.

Im Dauerbetriebszustand drehen die Turbinen der GuD-Anlage üblicherweise mit der Netzfrequenz von 50 Hz oder 60 Hz. Es können aber auch Betriebszustände erwünscht oder erforderlich sein, in denen insbesondere die Dampfturbine mit einer geringeren Drehzahl dreht, so z. B. bei einer dampfseitigen Überbrückung der Hochdruckstufe der Dampfturbine oder während des Anwärmvorgangs.

Bei geringeren Drehzahlen als der Netzfrequenz muss dabei aber der Generator der Dampfturbine vom Stromnetz entkoppelt werden. Dementsprechend wird über den Generator in diesen Betriebszuständen keine Leistung entnommen, wodurch das auf die Dampfturbine wirkende Gegendrehmoment vergleichsweise gering ist und die Dampfturbine unter Umständen nicht auf konstanter Drehzahl gehalten werden kann. Dies bedeutet aber einen Verlust an Flexibilität hinsichtlich der Betriebsweisen der gesamten GuD-Anlage, und weiterhin müssen evtl. ungünstige Betriebspunkte (beispielsweise Haltedrehzahlen, die nahe an Eigenfrequenzen liegen) in Kauf genommen werden, welche eine unnötige Schädigung und Alterung der Dampfturbine zur Folge haben können.

Der Erfindung liegt daher die Aufgabe zugrunde, ein Verfahren zum Betreiben einer Gas- und Dampfturbinenanlage der oben genannten Art anzugeben, mit dem bei besonders geringem Konstruktionsaufwand eine besonders hohe betriebliche Flexibilität erreichbar ist. Desweiteren soll eine für die Durchführung des Verfahrens besonders geeignete Gas- und Dampfturbinenanlage angegeben werden.

Bezüglich des Verfahrens wird diese Aufgabe erfindungsgemäß gelöst, indem die elektrische Leistung des der Dampfturbine zugeordneten Generators über den der Anfahreinrichtung der Gasturbine zugeordneten Frequenzumrichter in ein Verbrauchernetz eingespeist wird.

Die Erfindung geht dabei von der Überlegung aus, dass eine besonders hohe Flexibilität im Betrieb bei einem besonders geringen Konstruktionsaufwand der GuD-Anlage erreichbar wäre, wenn eine bedarfsgerechte Leistungsabnahme von der Dampfturbine mit möglichst einfachen technischen Mitteln realisiert werden könnte. Dabei ergibt sich insbesondere bei GuD-Anlagen die vorteilhafte Situation, dass der zum Start der Gasturbine vorgesehene Motor über einen Frequenzumrichter gespeist wird. Ein Frequenzumrichter ist somit in der GuD-Anlage ohnehin vorhanden. Weiterhin treten die Betriebszustände, in denen eine vergleichsweise geringe Drehzahl der Dampfturbine erforderlich ist, üblicherweise nur dann auf, wenn die Gasturbine bereits in Betrieb ist. Der Frequenzumrichter des Motors zum Anfahren der Gasturbine wird also in diesen Betriebszuständen nicht gebraucht und steht daher in der Art einer in der Anlage vorhandenen Ressource für andere Anwendungen zur Verfügung. Daher sollte der Frequenzumrichter der Anfahrmaschine der Gasturbine in den genannten Betriebsphasen zur flexiblen Ankopplung des Dampfturbinen-Generators an das Stromnetz genutzt werden. Dabei wird dem Generator der Dampfturbine über den Frequenzumrichter Leistung entzogen und in ein Verbrauchernetz eingespeist, so dass die Drehzahl der Dampfturbine stabilisiert werden kann.

In vorteilhafter Ausgestaltung ist die Gas- und Dampfturbinenanlage als Mehrwellenanlage ausgelegt. Insbesondere bei derartigen Mehrwellenanlagen, bei denen Dampfturbine und Gasturbine jeweils einen separaten zugeordneten Generator haben, und die Gasturbine unabhängig von der Dampfturbine angefahren wird, ist ein separater Frequenzumrichter vorhanden, der der Gasturbine zugeordnet ist.

Vorteilhafterweise erfolgt die Leistungseinspeisung über den Frequenzumrichter bei einer Drehzahl unterhalb der vorgesehenen Betriebsdrehzahl der Dampfturbine. Insbesondere in Betriebszuständen mit einer niedrigeren Drehzahl ist eine zusätzliche Leistungsabnahme zur Stabilisierung ebendieser Drehzahl erforderlich. Bei der vorgesehenen Betriebsdrehzahl, d. h. bei einer Drehzahl mit der Netzfrequenz von 50 Hz oder 60 Hz wird nämlich der Generator über einem ihm zugeordneten Festfrequenz-Transformator an das Verbrauchernetz geschaltet und sorgt somit für eine Stabilisierung der Drehzahl.

Vorteilhafterweise ist die Dampfturbine mehrstufig ausgelegt und die Leistungseinspeisung über die Frequenzumrichter erfolgt während einer dampfseitigen Überbrückung der Hochdruckstufe der Dampfturbine oder vorteilhafterweise während des Anwärmvorgangs der Dampfturbine. Diese Betriebszustände sind nämlich die Betriebszustände, in denen die Drehzahl der Dampfturbine auf einer Drehzahl unterhalb der vorgesehenen Betriebsdrehzahl der Dampfturbine gehalten werden soll, andererseits aber die Gasturbine bereits in Betrieb ist und der Frequenzumrichter der Gasturbine nicht mehr gebraucht wird. Er kann also insbesondere in diesen Betriebszuständen zur Stabilisierung der Drehzahl der Dampfturbine benutzt werden.

Die mit der Erfindung verbundenen Vorteile bestehen insbesondere darin, dass durch die Abnahme elektrischer Leistung eines der Dampfturbine zugeordneten Generators über einen Frequenzumrichter, der einer Anfahreinrichtung der Gasturbine zugeordnet ist, insgesamt eine verbesserte Flexibilität hinsichtlich der Betriebsweise und Erweiterung der zulässigen Betriebs- und Randbedingungen der GuD-Anlage möglich ist. Weiterhin besteht die Möglichkeit, insbesondere während des Anwärmvorgangs der Dampfturbine, Drehzahlsperrbereiche besser einzuhalten bzw. größere Abstände von potentiell gefährdenden Eigenfrequenzen zu halten. Somit wird die Sicherheit der GuD-Anlagenkomponenten erhöht. Weiterhin wird insbesondere während des Anfahrvorgangs der Dampfturbine zusätzliche, nennenswerte Mehrleistung an elektrische Energie dem Verbrauchernetz zur Verfügung gestellt. Zwar sind derartige Vorteile auch durch einen zusätzlichen, der Dampfturbine zuschaltbaren Frequenzumrichter erreichbar. Durch die Nutzung des Frequenzumrichters der Anfahreinrichtung der Gasturbine wird aber eine besonders ressourcensparende Doppelnutzung sowohl für Gasals auch Dampfturbine erreicht.

Ein Ausführungsbeispiel der Erfindung wird anhand einer Zeichnung näher erläutert. Darin zeigt die FIG eine schematische Zeichnung einer Mehrwellen-GuD-Anlage.

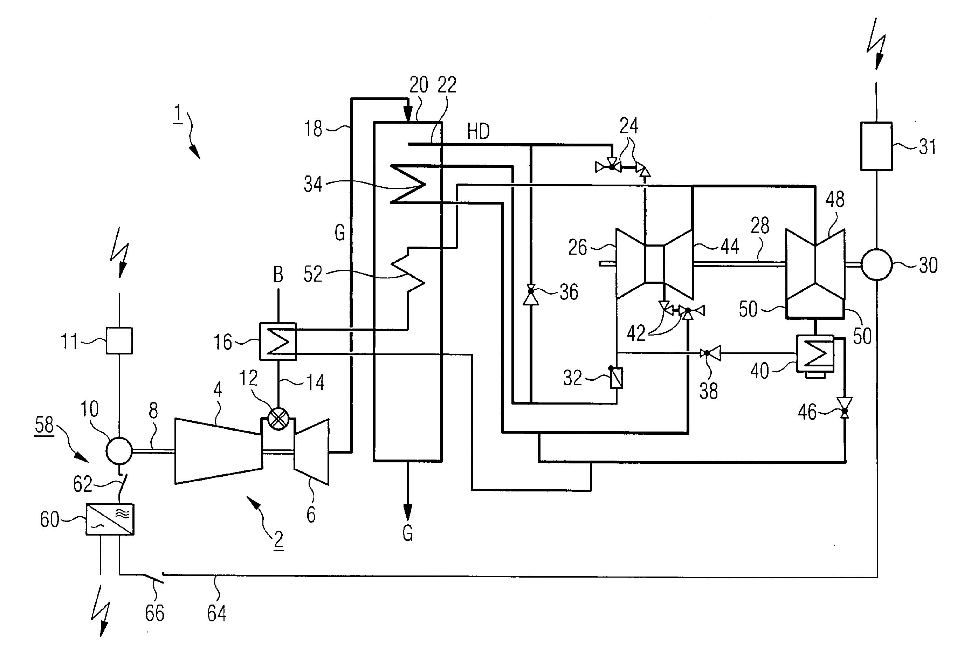

Die Mehrwellen-GuD-Anlage 1 gemäß der Figur weist eine Gasturbine 2 auf, die einen Verdichter 4 und eine Turbine 6 umfasst und über eine Welle 8 mit einem Generator 10 verbunden ist. Der von der Gasturbine 2 erzeugte Strom wird über einen Festfrequenz-Transformator 11 an ein Verbrauchernetz abgegeben. Angetrieben wird die Gasturbine 2 durch Verbrennung von durch eine Brennstofffördereinrichtung 12 aus einer Brennstoffleitung 14 zugeführten Brennstoff B. Zur Erhöhung des Wirkungsgrads der Gasturbine 2 wird der Brennstoff B mittels einer Brennstoffvorwärmeinrichtung 16 vorgewärmt.

Die durch die Verbrennung des Brennstoffs B freigewordene Energie wird in der Gasturbine 2 in mechanische Energie umgewandelt und über die Welle 8 an den Generator 10 übertragen, indem sie in elektrische Energie umgewandelt wird. Das in der Turbine 6 entspannte Rauchgas G wird anschließend über eine Abgasleitung 18 einem Abhitzedampferzeuger 20 zugeführt, wo es aufgrund seiner vergleichsweise hohen Temperatur von beispielsweise etwa 650 °C zur Dampferzeugung genutzt wird. Anschließend wird das Rauchgas G einem nicht näher gezeigten Abgaskamin zugeführt.

Im Abhitzedampferzeuger 20 wird in den Heizflächen 22 überhitzter Hochdruckdampf HD erzeugt. Dabei sind verschiedene Konfigurationen der Heizflächen 22 denkbar. Üblicherweise wird aus einer nicht näher gezeigten Wasserpumpe Wasser den Verdampferheizflächen zugeführt, in denen das Wasser teilweise oder ganz verdampft wird. Das nicht verdampfte Wasser kann gegebenenfalls anschließend in einer Wasserabscheideeinrichtung vom Dampf getrennt werden und der Dampf wird Überhitzerheizflächen zugeführt, in denen seine Wärmeenergie weiter erhöht wird.

An die Heizflächen 22 schließen sich Regelventile 24 an, durch die der Hochdruckdampf HD schließlich in die Hochdruckturbinenstufe 26 geleitet wird. Hier wird der Dampf entspannt und somit die thermische Energie in mechanische Energie umgewandelt, die über eine Welle 28 an einen Generator 30 übertragen wird, wo sie in elektrische Energie umgewandelt und über einen Transformator 31 an ein Verbrauchernetz abgegeben wird. Der entspannte Dampf wird aus der Hochdruckturbinenstufe 26 ausgeführt und über einen Regler 32 weiteren Überhitzerheizflächen 34 im Abhitzedampferzeuger 20 zugeführt. Betriebsabhängig kann dabei der Weg des Hochdruckdampfes beeinflusst werden: Bedarfsweise kann der Hochdruckdampf aus den Heizflächen 22 an der Hochdruckturbinenstufe 26 über ein Ventil 36 vorbeigeführt werden.

Ist der aus der Hochdruckturbinenstufe 26 austretende Dampf zu heiß oder hat einen zu hohen Druck für die weitere Verwendung, was insbesondere während des Anfahrprozesses der Dampfturbine auftreten kann, kann ein Teil des Dampfes über ein Ventil 38 direkt an den Kondensator 40 abgeführt werden. Dort wird der Dampf abgekühlt und wieder in flüssiges Wasser überführt, welches erneut dem Verdampfungsprozess in den Heizflächen 22 des Abhitzedampferzeugers 20 zugeführt werden kann. Dabei wird allerdings der gesamte Energieinhalt des Dampfes verworfen.

In den Überhitzerheizflächen 34 wird der aus der Hochdruckturbinenstufe 26 ausgetretene Dampf nochmals überhitzt und über weitere Regelventile 42 der Mitteldruckturbinenstufe 44 zugeführt. Dabei liegt die Mitteldruckturbinenstufe 44 auf derselben Welle 28 wie die Hochdruckturbinenstufe 26. Bedarfsweise kann der Dampf auch direkt über ein Ventil 46 in den Kondensator 40 abgeführt werden.

Nach der Entspannung in der Mitteldruckturbinenstufe 44 wird ein Teil des Dampfes der Niederdruckturbinenstufe 48 zugeführt, die wiederum auf derselben Welle 28 wie die Mitteldruckturbinenstufe 44 und die Hochdruckturbinenstufe 26 liegt. Nach seiner Entspannung in der Niederdruckturbinenstufe 48 wird der Dampf über Ableitungen 50 schließlich dem Kondensator 40 zugeführt, wo er abgekühlt und wieder in flüssiges Wasser überführt wird, welches erneut dem Verdampfungsprozess in den Heizflächen 22 des Abhitzedampferzeugers 20 zugeführt werden kann.

Kondensat wird aus der Mitteldruckturbinenstufe 44 in den Abhitzedampferzeuger 20 geführt, wo es verdampft wird und in Heizflächen 52 erhitzt wird. Dieser Dampf wird anschließend über eine Dampftrommel 54 in die Brennstoffvorwärmeinrichtung 16 geleitet und dort zur Vorwärmung des Brennstoffes B genutzt, wodurch der Wirkungsgrad der Gasturbine 2 durch die Erhöhung der Temperatur des Brennstoffes B und damit des Gasgemisches in der Brennkammer der Gasturbine 2 insgesamt erhöht wird.

Zum Anfahren der Gasturbine 2 ist ihr eine Anfahreinrichtung 58 zugeordnet. Die Anfahreinrichtung umfasst den Generator 10, der als Motor genutzt wird, sowie einen Frequenzumrichter 60, der über einen Schalter 62 zuschaltbar ist, und der die Gasturbine 2 mit Hilfe von elektrischer Energie aus dem Stromnetz und dem Generator 10 auf eine beliebige Drehzahl regeln kann.

Bei der Gas- und Dampfturbinenanlage 1 handelt es sich um eine Mehrwellenanlage; da der Dampf für Dampfturbine mit Hilfe des Abgases G der Gasturbine 2 erzeugt wird, wird die Dampfturbine erst in Betrieb genommen, wenn die Gasturbine 2 bereits angefahren ist. Der Frequenzumrichter 60 der Anfahreinrichtung 58 wird dann also nicht mehr für die Gasturbine 2 benötigt. Unter konsequenter Nutzung dieser Erkenntnis ist die Gas- und Dampfturbinenanlage 1 für eine besonders hohe betriebliche Flexibilität bei einem besonders gering gehaltenen Konstruktionsaufwand ausgelegt, indem der Frequenzumrichter 60 für eine Doppelfunktion ausgelegt ist. Dazu ist er über eine Leitung 64 mit einem Schalter 66 mit dem Generator 30 der Dampfturbine verbunden. Somit kann in Betriebszuständen, in denen eine geringere als die vorgesehene Betriebsdrehzahl der Dampfturbine erforderlich ist wie z. B. beim Anwärmen, über den Frequenzumrichter 60 Leistung vom Generator 30 der Dampfturbine abgenommen werden, so dass die Drehzahl der Dampfturbine stabilisiert wird. Somit ist mit einfachen technischen Mitteln ein erheblicher Zugewinn an Betriebssicherheit der GuD-Anlage 1 erreicht.

## Patentansprüche

1. Verfahren zum Betreiben einer Gas- und Dampfturbinenanlage (1) mit einem einer Anfahreinrichtung (58) einer Gasturbine (2) zugeordneten Frequenzumrichter (60), und einem einer Dampfturbine zugeordneten Generator (30), bei dem die elektrische Leistung des Generators (30) über den Frequenzumrichter (60) in ein Verbrauchernetz eingespeist wird.

2. Verfahren nach Anspruch 1, bei dem die Gas- und Dampfturbinenanlage (1) als Mehrwellenanlage ausgelegt ist.

3. Verfahren nach Anspruch 1 oder 2, bei dem die Leistungseinspeisung über den Frequenzumrichter (60) bei einer Drehzahl unterhalb der vorgesehenen Betriebsdrehzahl der Dampfturbine erfolgt.

4. Verfahren nach einem der Ansprüche 1 bis 3, bei dem die Dampfturbine mehrstufig ausgelegt ist und die Leistungseinspeisung über den Frequenzumrichter (60) während einer dampfseitigen Überbrückung der Hochdruckstufe (26) der Dampfturbine erfolgt.

5. Verfahren nach einem der Ansprüche 1 bis 4, bei dem die Leistungseinspeisung über den Frequenzumrichter (60) während des Anwärmvorgangs der Dampfturbine erfolgt.

6. Gas- und Dampfturbinenanlage (1), bei der einem einer Dampfturbine zugeordneten Generator (30) stromausgangsseitig ein einer Anfahreinrichtung (58) einer Gasturbine (2) zugeordneter Frequenzumrichter (60) zuschaltbar ist.

7. Gas- und Dampfturbinenanlage (1) nach Anspruch 6, die als Mehrwellenanlage ausgelegt ist.
